# EUROPEAN PATENT SPECIFICATION

(11) **EP 3 273 768 B1**
(45) Date of publication and mention of the grant of the patent: **17.04.2019**
(21) Application number: 15712161.7
(22) Date of filing: 26.03.2015
(51) Int. Cl.: A01D 51/00, A63B 47/02

(54) **COLLECTION CONTAINER, COLLECTION ASSEMBLY, SHELL SEGMENT, AND METHOD OF MANUFACTURING A COLLECTION CONTAINER**
SAMMELBEHÄLTER, SAMMELANORDNUNG, SCHALESEGMENT, UND VERFAHREN ZUR HERSTELLUNG EINES SAMMELBEHÄLTERS
CONTENEUR DE COLLECTE, ENSEMBLE DE COLLECTE, SEGMENT DE COQUE, ET METHODE DE FABRICATION D'UN CONTENEUR DE COLLECTE

(43) Date of publication of application: 31.01.2018
(73) Proprietor: Husqvarna AB, 561 82 Huskvarna (SE)
(72) Inventor: MOCK, Axel, 89134 Blaustein (DE); SCHNEIDER, Regina, 89250 Senden (DE)
(74) Representative: Finkele, Rolf
(86) International application number: PCT/EP2015/056624
(87) International publication number: WO 2016/150519

(56) References cited:
- WO-A1-2013/064660
- US-A- 3 902 749
- US-A1- 2001 048 228

## Description

The present application is directed to a collection container, collection assembly, shell segment, and method of manufacturing a collection container.

Collecting objects, for example fruits like apples, pears, quinces and similar, from the ground is comparatively cumbersome if done manually.

Therefore, efforts have been made to at least partially ease picking up fruits from the ground. Reference is exemplarily made to WO 2013/064660 A1 which shows a fruit collector having a collecting basket made from a plurality of elastic, bulged wire straps which are clamped at their ends by two axial hubs to define an overall bulged, convex collecting cage or basket. By rolling the collecting basket over a fruit lying on the ground, the wires where the fruit touches the basket are spread apart by the fruit such that the fruit can enter the container through the basket envelope made from the plurality of wires. The design, manufacture, and assembly of such a collecting basket having the plurality of wires attached to the hubs are comparatively elaborate and laborious.

Document US 2001/0048228 describes a sports ball retrieval and dispensing device including a ball retrieving and dispensing receptacle, the receptacle comprising an outer wall having a gate structure which is pivotally mounted to and extends in circumferential direction between opposite end support members of the receptacle, wherein collected balls can, in a ball dispensing mode of operation, be removed from a holding chamber of an enclosure structure of the receptacle by opening the gate structure on the receptacle and pouring out the collected balls from the holding chamber.

Therefore, it is an object of the invention to provide a possibility for facilitated, simplified and/or cost-effective manufacture and assembly of a respective collection container. In particular a collection container, collection container shell segment, collection assembly, and method manufacturing a collection container shall be provided which allow or provide facilitated, simplified and/or cost effective manufacture and assembly, and preferably at the same time allow alleviated manual operation.

This object in particular is accomplished by the features and subject matter of the independent claims. Embodiments in particular also result from respective dependent claims.

According to an aspect of the invention, a collection container shell segment is provided which is designed and arranged for being assembled to at least one further structurally identical collection container shell segment to constitute in the ordinary assembled state an outer shell, or the outer wall structure, or the envelope of an inner volume, of a collection container.

According to a further aspect of the invention, a collection container, in particular implemented as a basket or cage, is provided and which is configured to be pivotable around a pivot axis and operable to pick up objects, such as fruits, by rolling the collection container over the objects in a pivoting movement to thereby pass the objects through the outer shell into the collection container. The proposed collection container comprises an outer shell that is assembled from a predefined number, at least two, structurally identical collection container shell segments, wherein each of the shell segments is designed or implemented according to at least one of the shell segment embodiments described herein.

Advantages and advantageous effects related to the collection container in particular result from advantages and advantageous effects of the proposed shell segments.

According to a further aspect of the invention, a collection assembly is provided comprising at least one collection container according to at least one of the collection container embodiments described herein. The collection assembly may further comprise a retaining bracket for pivotably retaining the collection container, and may further optionally comprise a handle for manual operation and adapted to be coupled to the retaining bracket. Advantages and advantageous effects related to the collection assembly in particular result from advantages and advantageous effects of the proposed shell segments and collection container.

According to a further aspect of the invention, a method of manufacturing a collection container according to at least one of the embodiments described herein is provided. Advantages related to the method in particular result from respective advantages described in connection with any embodiments of the shell segment or collection container. Further, as will become inferred from the discussion below, the proposed method is comparatively simple, and may at the same time conducted comparatively cost-efficient.

In embodiments of the invention, the outer shell of the collection container may be considered as a full shell, extending, with respect to a pivot axis, over a dihedral angle of 360°, i.e. defining the outer walls of the collection container over a full axial rotation. The outer shell, but also the collection container may in embodiments have a rotationally symmetrical structure respectively form.

The collection container in embodiments may be configured to be pivotable around a pivot axis, and adapted to roll or be rolled on and over the ground. The collection container further may be operable to pick up objects, such as fruits like apples and similar, by rolling the collection container over respective objects, resting for example on the ground, in a pivoting movement of the collection container to thereby pass the objects through the outer shell into the collection container, for example by elastic deformation of a suitable section of the outer shell.

The collection container shell segment in embodiments may define, in circumferential direction relative to the pivot axis, a predefined angular sector of the outer shell of the collection container, and may have, span or spread over a predefined dihedral angle relative to the pivot axis.

The collection container shell segment in embodiments may constitute an arcuate sector of the collection container confined by two, with respect to the pivot axis, radial planes, i.e. two planes running through and containing the pivot axis, and mutually rotated by the dihedral angle, or by at least one, in particular two, tangential planes, i.e. planes extending parallel to the pivot axis.

A shell segment in embodiments may define, with respect to the assembled state of the collection container, and with respect to the pivot axis, a wedge-shaped sub-section or cut, i.e. segment, of the collection container, having a wedge angle corresponding to the dihedral angle.

In other embodiments, a shell segment may define a layer or slice of the collection container confined between two mutually parallel tangential planes extending parallel to the pivot axis.

In further embodiments, a shell segment may define a cap defined by a single, with respect to the pivot axis, tangential plane.

In embodiments in which the shell segment defines a cap, as described beforehand, the collection container may be assembled from an upper and lower cap-like shell segment and an intermediate slice or layer shaped shell segment defining a double-sided truncated section of the collection container.

Advantageously, the collection container shell segments for a certain collection container in embodiments may be designed such that the collection container may be assembled by a predefined number of structurally identical shell segments, i.e. of shell segments that are identical in construction.

In embodiments, the shell segments may be implemented and designed such that all of the shell segments from which the collection container is or is to be assembled are of identical construction. This for example can be obtained by using half or quarter shells or wedge-shaped shell segments having defined dihedral angles.

As can be seen, the proposed collection container shell segment constituting a predefined dihedral angle section of an entire collection container, and which can be assembled with further, advantageously structurally identical, shell segments to span the whole collection container, is suitable to considerably reduce assembly effort, manufacture and manufacturing costs for the collection container. In particular, a collection container for collecting objects in the sense of the present invention may be assembled by the use of for example merely two half-shells or, for example, four quarter shells. This clearly is suitable for reducing assembly effort, particularly as compared to known solutions necessitating each single wire strap to be individually mounted or fixed to axial hubs.

In embodiments, the dihedral angle spanned by the predefined angular sector lies in at least one of the ranges 30 - 180 °, 45° - 135°, and 60° to 90°.

In case that the shell segments are constructed such that they can be assembled and set together without overlap, excluding or neglecting an overlap established at possible connector interfaces and connector elements such as latching elements, provided for mutually engaging adjoining shell segments, the sum of the dihedral angles of the shell segments in the assembled state of the collection container may be about, preferably equal, 360°, in particular meaning that the shell elements define the collection container all along its whole circumference. In case that adapter pieces or similar intermediate elements between adjoining shell elements are use or provided, or in case that adjoining shell segments overlap in circumferential direction, the sum of the dihedral angles of the shell segments constituting the collection container may lie below or above 360°.

Using dihedral angle ranges as mentioned above, a predefined, and, in view of assembly effort, convenient number of shell segments may be provided.

As an example, shell segments each having a dihedral angle of 180° may be provided, meaning that the collection container can be assembled from two half-shells.

As another example, shell segments each having a dihedral angle of 90° may be provided, meaning that the collection container can be assembled from four quarter-shells.

It shall be noted that also other dihedral angles and a different number of shell segments, such as three shell segments or six shell segments, may be provided. Further, it is noted that the shell segments assembled to a collection container need not have equal dihedral angles. In view of this, a selection of shell segments constituting in the assembled state the collection container may have two cap-shaped shell segments and an intermediate slice-type shell element or layer, respectively defined by different dihedral or circumferential angles and intersecting planes relative to the pivot axis. In other variants, the connection container may be assembled from a half-shell and two quarter shells, respectively spanning different dihedral or circumferential angles. Other configurations are conceivable.

In general, shell segments constituting a collection container may be defined or obtained by dividing the outer shell of the collection container by intersecting planes selected or placed in such a way that severing of the envelope of the collection container, in particular elastic straps defining such an envelope, is avoided over the axial length of the collection container.

As can be seen, by the design and configuration of the proposed shell segments, the assembly of the collection container may be considerably facilitated due to a limited number assembly parts and comparatively easy mounting procedures.

Improvements with respect to assembly effort and cost may be obtained if shell segments are used that are structurally identical. This in particular applies in cases where all of the shell segments needed for the assembly of a single collection container are structurally identical.

In view of using structurally identical shell segments only a restricted number of manufacturing forms or molds, for example for injection molding the shell segments, may be required. Specifically, in case that all of the shell segments for assembling a single collection container are structurally identical, a single manufacturing form for the shell segments may be sufficient, which clearly is an advantage in view of manufacturing cost reduction.

As already indicated, in embodiments, the shell segments provided for the assembly of a single collection container may be implemented as half-shells or quarter-shells.

In embodiments, the shell segment may be implemented as an integral, one-piece part. In this case, the shell segment may be made from a plastic material. Plastic materials for manufacturing the shell element may be processed by using injection molding techniques.

Providing the shell segments as one-piece parts, advantageously made by injection molding, may be effective in reducing the number of assembly parts thereby reducing the assembly effort and complexity for assembling a collection container.

In embodiments, the collection container may be implemented as a collection basket or cage. Such a basket or cage may comprise a plurality of elastic threads or straps, preferably having a wire-type or wire-shape configuration, and extending in lengthwise direction in accordance with the pivot axis of the collection container.

The threads or straps may be designed to extend between both axial ends of the collection container in a direction transversely to the circumferential direction of the collection container relative to the pivot axis.

The plurality of threads or straps may span or constitute a circumferential envelope of the collection container, which envelope, due to the elasticity of the threads or straps, is permeable for objects to be collected with the collection container. In particular the threads or straps may be made from an elastic plastic material by using injection molding techniques.

In embodiments, the collection container shell segment may comprise at each axial end an axial hub segment. The hub segments may be designed to define axial terminal parts of the collection container.

In embodiments, the hub segments may be interconnected in axial direction, i.e. in axial direction relative to the pivot axis, by a plurality of elastic threads or straps, in particular as previously described. The treads provided in axial direction between the axial bubs are mutually spaced in circumferential direction relative to the pivot axis. Further, the threads or straps are designed and arranged such that they can be elastically deformed and pushed or forced apart in circumferential direction, such that an object, intended to be collected, can be passed through a gap generated between for example a group of neighboring threads or straps, in that the threads or straps are elastically forced or pushed apart in circumferential direction. The threads or straps may in variants be bulged radially outwards to define or form a bulged collection container of convex structure.

In embodiments, the collection container shell segment may comprise, at an axial end thereof, at least one axial hub segment, wherein the axial hub segment is implemented as a ring segment, forming a part of an axial hub, configured for example as an axial flange or stub axle section, which axial hub in the assembled state of the collection container, may be pivotably coupled with a counterpart hub of a retaining bracket for the collection container.

The axial hub segment, in particular the ring segment, may be designed such that the threads or straps emanate or originate from the hub or ring segment at certain mutually spaced locations along the circumferential direction. In particular, the axial hub segment and threads or straps may be manufactured in a one-piece integrated form.

The straps in embodiments may form a grid of non-crossing grid elements in form of the axial straps. However, embodiments with crossing straps shall not be excluded.

In embodiments in which both axial ends of the collection container are provided with an axial hub segment, which may for example be implemented as described above, the threads or straps may interconnect between both axial hub segments and may be integrally formed in a one-piece configuration with both axial hub segments. In this case, the shell segment may be considered to constitute a single assembly unit, suitable for the reduction of the overall number of assembly parts, and for facilitating and easing assembly of the collection container.

In embodiments, in which the shell segment comprises an axial hub segment which is implemented as a ring segment, it may be provided that an inner radius of the ring segment is such that, in the assembled configuration of the collection container, an axial discharge opening for discharging objects collected in the collection container is established at an axial end of the collection container. This shall mean, that the inner radius of the ring segment is configured, preferably selected sufficiently large or small, such that the finally assembled collection container comprises at the axial end an axial discharge opening having a size or diameter such that objects, such as fruits, collected with and resting within the collection container can be discharged from the collection container via the discharge opening.

As can be seen, the proposed design and assembly of a collection container using several shell segments makes it possible to flexibly adapt the collection container to different needs or requirements. In particular, the manufacturing process for the collection container can be flexibly adapted to structural or design changes of the collection container.

In embodiments, in which the collection container comprises at least one axial hub segment, in particular as described further above, at least one of the hub segments may be implemented as an axial circular wall segment. In this case, the axial hub of the collection container in the assembled state, may be implemented as a closed wall section, and a stub axle section configured for pivotably coupling the collection container to for example a retaining bracket can be established or provided at an outer surface of the axial wall section.

It has to be noted, that the proposed design and assembly of the collection container having several shell segment components makes it possible to flexibly adapt the collection container to different needs or requirements, in particular in the region of the axial end sections of the collection container. Thus, the manufacturing process for the collection container as proposed herein even in case of structural or design changes of the collection container may be easily and flexibly adapted whilst keeping and securing comparatively easy and straightforward mounting and assembly processes for the collection container.

In embodiments comprising an axial hub segment implemented as an axial circular wall segment, such as with the embodiment described above, defining an axial circular wall of the collection container, the axial wall segment may comprise at an outer axial side an axial protrusion defining a segment of an axial stub axle intended to cooperate, in the assembled state, with a counterpart hub or bearing shell of for example a retaining bracket.

As can be seen, with the modular concept and assembly of the collection container as proposed herein, according to which several shell segments are combined to form a single collection container, it is in particular possible to implement functional or structural elements such as an axial stub axle. Functional as well as structural elements may be implemented by suitably splitting or dividing respective functional element in sections or segments of the shell segments, such that, when setting together the shell segments, the overall shape and geometry of respective functional or structural elements is established, preferably without requiring additional or extra assembly and/or mounting steps.

In embodiments, for example related to the modular design of the collection container as proposed herein, which comprise at least one hub segment, at least one of the hub segments may comprise at least one connector or latching interface.

The latching interface in embodiments may comprise snap connectors, such as plug-and-snap connectors like a snap-tongue or snap-pin, and one or several corresponding snap-recesses.

The connector or latching interface may in embodiments comprise at least one connector or latching structure or connector or latching member, designed for engagement, in the assembled state of shell segments, with a counterpart connector or latching structure of a counterpart connector interface of an adjoining shell segment.

The connector interfaces may be considered to take account of the modular structure and assembly of the collection container defined by the use of several shell elements and as proposed herein. The connector interfaces and connector structures may be considered to enable easy and straightforward interconnection of the single shell segments to form the collection container.

In embodiments, in which a connector interface is provided, the connector interface may comprise at least one of: at least one locking or latching extension, and at least one latching recess.

The latching extension may be configured and adapted to engage, in the assembled state of the shell segment it belongs to, into a corresponding latching recess of a connector interface of an adjoining shell segment. Further, the latching recess may be configured and adapted to engage, in the assembled state, a latching extension of a connector interface of the or a further adjoining collection container shell segment.

In embodiments, the connector interface at least in part may be formed at or on at least one axial flange of the collection container shell segment. The axial flange may be implemented at or on or in connection with an axial hub segment and/or axial protrusion, which have been described in detail further above.

Specifically, in embodiments, a connector interface may be provided on or at the axial protrusions provided on an outer axial side of an axial wall segment of the shell segment, in particular in such a way that a coupling or connecting force or effect is generated or obtained in the assembled state in the region of a stub axle made up by the axial protrusions.

In embodiments, the connector interface may be provided and oriented in circumferential direction, which in particular shall means that adjoining shell segments may be held together by forces acting in circumferential direction. Further, providing the connector interfaces at respective circumferential faces, comparatively easy assembly operations can be achieved.

In embodiments, in which the shell segments comprise axial hub segments or axial stub axle segments making up, in the assembled state of the collection container, an axial hub or axial stub axle, it may be provided that a respective axial hub and axial stub axle are accommodated and embraced, for example in circumferential and optionally in axial direction, by respective counterpart hubs, for example bearing shells, of a retaining structure, such as a retaining bracket, configured to pivotably retain the assembled collection container. Implementing the hub and/or stub axle such that it/they can be embraced by a counterpart hub or bearing shell of suitable design may be advantageous for the overall mounting process, because specific and separate fixing elements may be dispensed with. In addition, by using, providing or enabling a circumferential embracement, improved support and stability may be obtained for the collection container.

In embodiments of the connection container, each shell segment may define, in circumferential direction relative to the pivot axis, a predefined angular sector of the outer shell of the collection container. The shell segment in embodiments may have, with respect to the pivot axis, a predefined dihedral angle, wherein the sum of the dihedral angles of the predefined number of shell segments preferably equals 360°. Regarding the sum of the dihedral angles, reference is additionally made to the discussion further above, indicating that, depending on the specific design of the shell segments, the sum of the dihedral angles may exceed or be lower than 360°, depending on the overlap or distance between adjoining shell segments in circumferential direction.

Coming now to embodiments of the proposed method, embodiments of a method of manufacturing a collection container may comprise the steps of:
a. manufacturing a predefined number of structurally identical collection container shell segments embodied at least in accordance to at least one of the embodiments as described herein, each shell segment defining, in circumferential direction relative to the pivot axis, a predefined angular sector of the outer shell of the collection container, having, with respect to the pivot axis, a predefined dihedral angle, wherein the sum of the dihedral angles of the predefined number of shell segments advantageously equals 360°;
b. assembling and putting together the structurally identical shell segments by interconnecting corresponding connector interfaces of adjoining shell segments to obtain, with respect to the pivot axis, a circumferential full shell defining the outer shell of the collection container.

In account of the above discussion, it can be seen, that the shell segment, collection container, collection assembly, and method of manufacturing a collection container are suitable for obtaining or achieving the object identified further above.

In further embodiments, a retaining bracket, in particular a retaining frame or retaining structure may be provided that is implemented to be used with a collection container according to any embodiment described herein. In particular, a retaining bracket or frame may be provided that is able to pivotably retain or support the collection container, which may be implemented as a collection basket.

In embodiments, an adapter unit arranged to be releasably coupled to a counterpart adapter unit of for example a handle may be associated, in particular fixedly or releasably mounted, to the retaining bracket. The counterpart adapter unit may for example be associated with a handle, such that the fruit collecting tool can be releasably coupled to the handle for manual operation.

In embodiments, the collection assembly, retaining bracket, and/or collection container may either be specifically adapted to a special fruit/object or may be configured to be used with and/or customized to a certain number of fruits or objects of similar shape.

In embodiments, the retaining bracket may be configured such that it can accommodate different types of collection containers respectively adapted to collect a specific type of object or fruit, e.g. apples, peaches, nuts, and so on. The retaining bracket may be adapted for multiple uses with different types or sizes of collection containers.

According to a further aspect of the invention that may be separately claimed, a collection system or kit may be provided that comprises at least one retaining bracket and at least one collection container set together from shell segments as described herein, or at least one retaining bracket and at least a number of shell segments as described herein suitable to be set together or assembled to form at least one collection container.

The kit may be adapted such that different types, sizes or shapes of collection containers, in particular specifically adapted to collect different types, sizes or shapes of fruits can be used. Such a kit in particular may comprise a number of fruit or object collecting tools having pivotable collection containers that can be coupled with a respective handle. Each fruit collecting tool may comprise a separate retaining bracket associated with a corresponding collection container and corresponding shell segments according to any embodiment described herein. However, it is also possible that the collecting tools comprise a uniform retaining bracket and a certain number of collection containers in which each of the collection containers is configured to be coupled to the uniform retaining bracket.

In embodiments, the uniform retaining bracket may be fixed in shape and adapted to be coupled to a single collection container or to a certain number of different collection containers. In particular, different types of collection containers may be configured to be coupled with the uniform retaining bracket. Alternatively, the retaining bracket may be implemented to be variable in shape and/or form, such that it can be adapted to different shapes and/or forms of collection containers. However, also in the embodiment with variable retaining bracket, a certain setting of the retaining bracket in form or shape may be provided that is able to cooperate with several types of collection containers adapted to said certain setting.

In such a system or kit, the collector assembly can easily be adapted to the collection of different kinds of fruits or objects, for example by exchanging the type of fruit collection tool and/or the collection container. At least the retaining bracket and collection container of such a system or kit may be embodied in accordance with any embodiment or variant as described herein.

The retaining bracket in embodiments may be implemented to pivotably support or retain the collection container in such a way that the collection container is pivotable around a major axis of rotation. The axis of rotation, or pivot axis in particular may coincide with an axis of symmetry, in particular an axis of rotational symmetry, of the collection container.

In embodiments, the collection container may comprise an oblong or prolong structure, i.e. it may have a structure in which a dimension in axial direction, in particular parallel to or coinciding with the pivot axis, is larger than a dimension in transverse, radial direction, or it may have a structure in which the dimension in axial direction is smaller than the dimension in transversal, in particular radial, direction.

In embodiments, the retaining bracket may comprise a spout that is configured to pass through fruits or objects to be collected or drained from the collection container. The spout may be configured to let pass through objects into and out of the collection container. In embodiments, the spout may extend and open in a direction parallel and/or inclined to a pivoting axis defined by the retaining bracket.

In embodiments, the spout may be integrally formed with the retaining bracket. Here, the spout and retaining bracket may form and define a single-part component. In such embodiments, the spout may be fixedly and immovably attached to or implemented at the retaining bracket.

In other embodiments, the spout may be provided as a separate component and may be configured to be mounted or connected to the retaining bracket. In particular in such embodiments, the spout may be movably attached to the retaining bracket. In embodiments, the spout, or at least a section thereof, may be attached or mounted such that it can be swivelled and/or rotated relative to pivot axis of the retaining bracket.

In further embodiments, the spout may be implemented such that the direction and orientation of an open end of the spout facing away from collection container in the assembled state, and defining a type of collection mouth or emptying opening can be altered in a rotating and/or swivelling movement of the spout or the moveable section thereof. In this way, the spout can be adjusted to best suit fruit collecting requirements and user-specific operating conditions.

In embodiments, the opening plane of an outer opening of the spout may be implemented in such a way, that in an optimal or average operational condition of the fruit collector related to a rolling collection operational mode, an angle in counterclockwise sense between a vertical plane running through the pivot axis and an intersecting plane running through the pivot axis and coinciding with a centre plane of the bracket lies in the range between 30 and 60 degrees, in particular in the range of about 55 degrees.

In embodiments, the collection container may comprise or may be defined inter alia by an envelope, defining, with respect to the pivot axis, a circumferential, in particular elastic, envelope that is permeable for fruits to be collected or intended to be collected.

The envelope may in embodiments comprise a plurality of elastic sections or elements designed and implemented such that an object, in particular fruit, lying on the ground can elastically deform a certain number of the elastic elements to thereby pass through the envelope and get from the outside to the inside of the collection container upon rolling the collection container over or moving it over the object.

In embodiments, the elastic sections may comprise wires or wire bars made from a plastic, metal material and/or composite material, in particular reinforced material.

In particular embodiments, the wire bars, may have a diameter in the range between 1.0mm to 1.5mm, or 1.1mm to 1.4mm, or 1.25mm to 1.3mm. Such diameters may provide sufficient bendability and at the same time sufficient flexibility to allow collecting of objects, in particular fruits, without significantly injuring the surface of the collected objects, and allowing manufacture by injection moulding and similar.

A collection container having an envelope in accordance with the embodiment mentioned above may be rolled on the floor or ground by a user, whereby objects can be picked up by rolling the collection container over the objects such that respective objects elastically deform and the envelope to generate an entrance opening or entrance gap for penetrating the envelope. Penetration of the envelope involving elastic deformation of the envelope may occur for example in a direction transversal to the pivot axis.

In embodiments the retaining bracket, in particular the base section thereof, may comprise a clutch, in particular a standardized clutch, or coupling adapted to exchangeably couple the retaining bracket to a counter-clutch provided on a handle, such as a multi-functional handle. A connection between the counter-clutch and clutch may be of push-and-snap type, or may comprise a screw fastening mechanism, or others.

In embodiments, the collection container may comprise at an axial end thereof a stub axle section having a central through-hole or discharge opening sized and dimensioned so as to enable objects to be collected to move or be moved into the collection container, wherein the stub axle section may be configured to cooperate or to be coupled with a bearing shell of the retaining bracket. The discharge opening or through-hole may be used to collect fruits by moving objects through the opening into the collection container, but may primarily be used for discharging objects out of the collection container. The discharge opening may be adapted such that one object at a time can pass through.

In embodiments, the stub axle section may comprise a bearing or sliding surface, for example of a segmented ring-shaped configuration, which may be adapted to cooperate in the mounted state with a counterpart bearing or sliding surface of a bearing shell of the retaining bracket. The bearing or sliding surface may be an inner or also an outer surface, wherein the counterpart bearing or sliding surface of the hub then may be implemented as an outer or inner surface.

In embodiments, one of the bearing or sliding surfaces may comprise friction reducing or guiding components, structures or structural elements suitable for reducing friction between the bearing or sliding surfaces and/or for obtaining proper guidance of the bearing or sliding surfaces, in particular for restricting movement or play or clearance of the bearing or sliding surfaces in axial direction. These friction reducing components or structural elements may comprise protrusions and/or depressions, in particular beads and/or bulges and the like, suitable for reducing frictional forces acting between the sliding or bearing surfaces and/or for generating adequate guidance. The friction reducing components or structural elements may for example be provided in axial and/or radial direction relative to the pivot axis, and may in addition be configured to avoid jamming of a pivoting movement of the collection container, and for example may be implemented slip rings.

In embodiments, the collection container may comprise an additional or a further stub axle section implemented at an axial end of the collection container, wherein the additional stub axle section may be implemented as a shaft configured to cooperate with a corresponding bearing shell implemented at the retaining bracket.

The further stub axle section may comprise a plate hub with a centred axle stub or shaft projecting therefrom. The axle stub or shaft may be configured in such a way that it can cooperate with a bearing shell or bearing mounting of the retaining bracket.

Below, exemplary embodiments of the invention will be described in connection with the annexed figures, in which
- FIG. 1: shows a perspective view of a collection assembly for the collection of objects, such as fruits, in accordance with an exemplary embodiment of the invention;
- FIG. 2: shows the collection assembly of FIG. 1 in a partially disassembled state;
- FIG. 3: shows a quarter shell segment of a collection container of the collection assembly in FIG. 1 and FIG. 2;
- FIG. 4: shows a half shell segment assembled from two quarter shell segments according to FIG. 3;
- FIG. 5: shows a detail of FIG. 4;
- FIG. 6: shows two half shell segments according to FIG. 4 shortly before assembly;
- FIG. 7: shows a detail of FIG. 6;
- FIG. 8: shows a side view of a collection assembly for illustrating ordinary operation; and
- FIG. 9: shows a perspective of the collection assembly also related to ordinary operation.

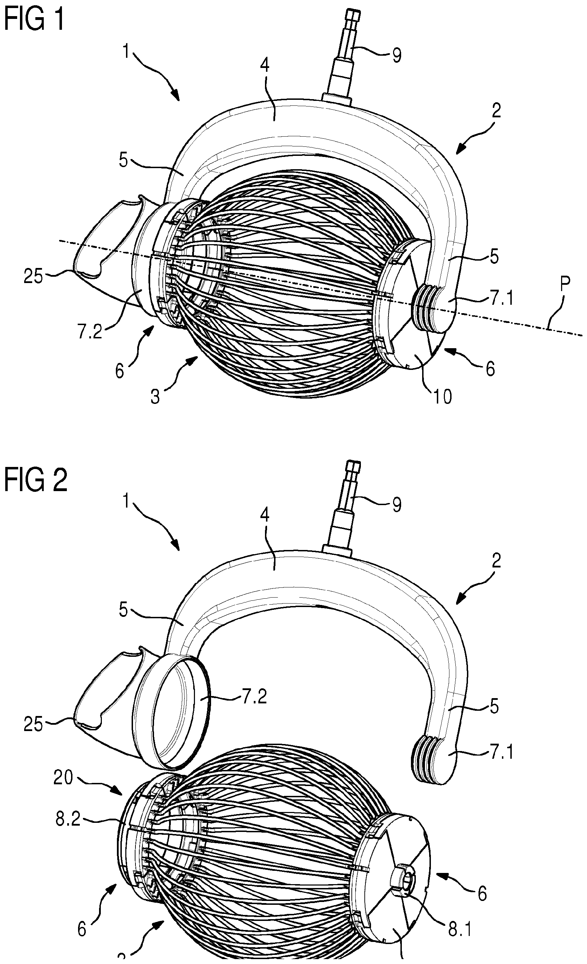

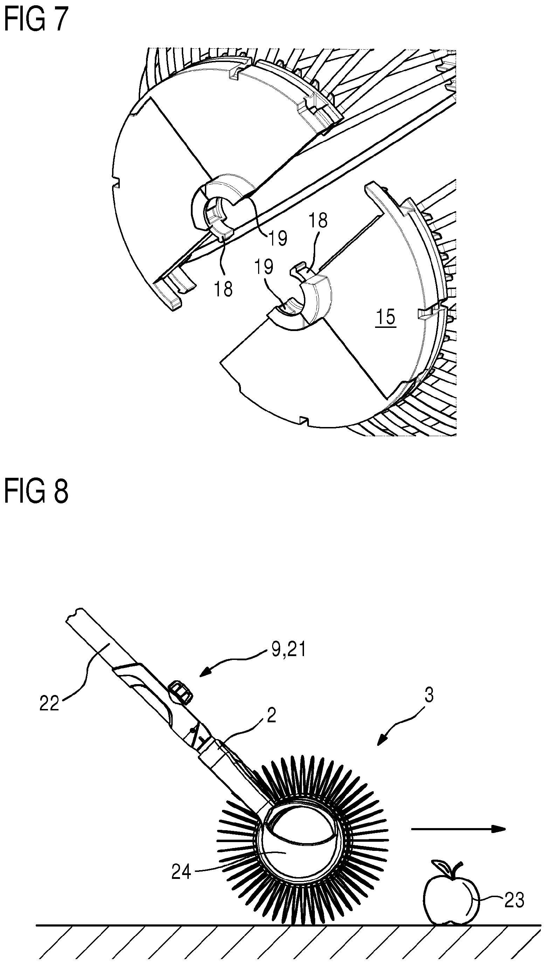

FIG. 1 shows a perspective view of an exemplary embodiment of a collection assembly 1 for the collection of objects (cf. 23 in FIG. 8), such as fruits like apples and the like, but also for the collection of other objects of similar shape such as for example nuts, balls, and the like.

The collection assembly 1, as shown in the exemplary embodiment in FIG. 1, may comprise a retaining bracket 2 and a collection container 3.

The retaining bracket 2 may be of a C-shaped configuration having a base section 4 and a pair of retaining arms 5 projecting therefrom. As shown in FIG. 1, and also in FIG. 2 showing the collection assembly 1 of FIG. 1 in a partially disassembled configuration, the retaining bracket 3 may be in the form and configuration of a wheel fork adapted to pivotably retain the collection container 3 at axial hub sections 6 thereof.

As can in particular be seen from FIG. 2, the retaining arms 5 may comprise at their free ends respective bearing shells 7.1 and 7.2 respectively designed and configured to accommodate and retain corresponding stub axle sections 8.1 and 8.2 such that the collection container 3 is able to be rotated around a pivot axis P (FIG. 1) defined by the bearing shells 7 and stub axle sections 8.

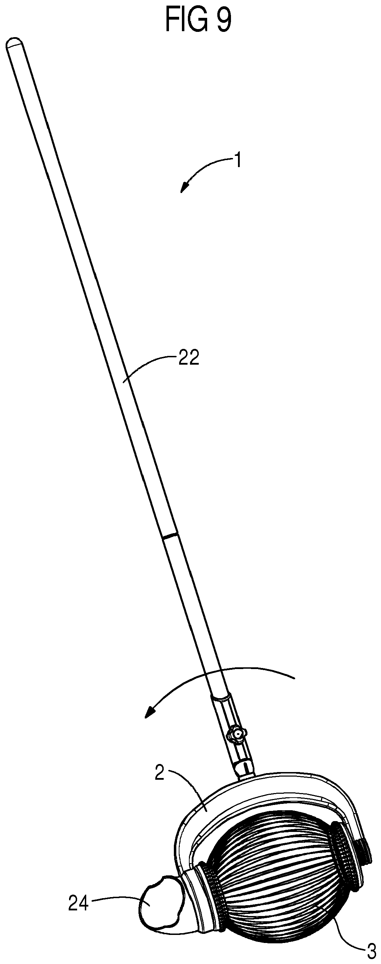

The retaining bracket 3, as shown in the exemplary embodiments in FIG. 1 and FIG. 2, may comprise at a site averted from the retaining arms 5 an adapter section 9. The adapter section 9 may be provided and adapted to be coupled with a counterpart adapter of a handle or handle bar (cf. 21 in FIG. 8, FIG. 9) enabling manual operation of the collection assembly 1.

As is indicated and can be concluded from in FIG. 1 and FIG. 2, the collection container 3 may comprise and be assembled from a certain, in particular predefined number, of collection container shell segments 10. Note, that in FIG. 1 and FIG. 2 only one of the in total four shell segments is indicated with reference sign 10.

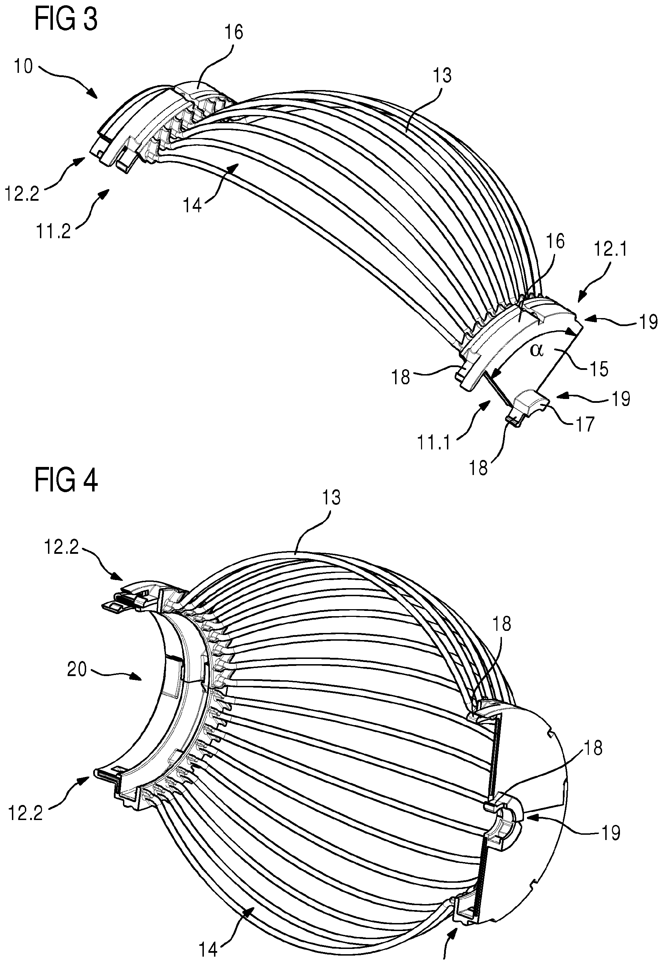

FIG. 3 shows one of the quarter shell segments 10 of the collection container 3 of the collection assembly 1 as shown in in FIG. 1 and FIG. 2.

The shell segment 10, in accordance with the embodiment shown in FIG. 3 is implemented as a quarter shell segment 10, which means, that the outer shell of the collection container 3 is composed of four (i.e. 4) shell segments, wherein each of the shell segments in the embodiment in view of the circumferential direction relative to the pivot axis P covers a dihedral angle α (alpha) of 360° * ¼ = 90°.

The dihedral angle α (alpha) spanned by the shell segment 10 may be defined by radial planes running through the pivot axis and confining the shell segment 10 in circumferential direction, wherein elements, such as latching elements of connector interfaces projecting in circumferential direction and overlapping with adjoining shell sections in the assembled state preferably are disregarded in determining the dihedral angle.

Thus, the dihedral angle of embodiments of the shell segment may be defined as an angle confined between radial planes defined by the circumferential extension of the shell segment, excluding however sections overlapping with adjoining shell sections in the assembled state.

It shall be noted, that in different embodiments of the collection container 3, the shell segments may have dihedral angles α (alpha), i.e. different from 90°, and that dihedral angles of shell segments constituting a collection container 3 in the assembled state may have mutually different dihedral angles.

The shell segment 10 shown in the embodiment of FIG. 3 may be made as one-piece integrated part, in particular from plastic in a moulding process. In this way, shell segments 10 and therefore also the collection container 3 may be manufactured comparatively easily and cost-efficient.

As shown in the embodiments according to the figures, the shell segment(s) 10 are structurally identical, and a collection container 3 therefore can be assembled by mounting together four identical shell segments 10.

In accordance with the embodiments shown in the figures, it can be inferred that the use of identical shell segments 10 may result in a generally rotationally symmetric form of the collection container 3. Such a configuration may be preferable in view of the intended use of the collection container by collecting objects in a rolling over motion, which will be described further below.

As can be concluded from the above discussion, assembly of the collection container can be accomplished in a comparatively simple, uncomplicated, and cost-effective way. It shall be noted, that this also applies for embodiments in which the collection container 3 is split into less than four shell segments 10, and still applies for embodiments in which the collection container 3 is split into more than four shell segments 10.

As shown in the exemplary embodiments in the figures, for example FIG. 3, the shell segment 10 may comprise at each axial end 11.1 and 11.2 an axial hub segment 12.1 and 12.2. The axial hub segments 12, in the assembled state define the axial end shape and configuration of the outer shell 10 of the collection container 3.

The outer shell 10 of the collection container 3 may, as shown in the exemplary embodiments shown in the figures, further be defined by, bulged straps 13 extending in axial direction between and interconnecting the axial hub segments 12.

The bulged straps 13, which in the embodiment have a wire or filament like longitudinal structure may be made from the same material as the axial hub segments 12, and further may be formed integrally with the axial hub segments 12. The straps 13 are designed and implemented such that they are elastically deformable or bendable, wherein a major direction of elastic deformability may correspond to the circumferential direction. The deformability may be such that neighbouring straps 13 can be pushed apart in circumferential direction to thereby enlarge a gap 14 between at least two adjacent straps 14.

The straps 13 may, as shown in the embodiments in the figures and in view of their overall form, be bent outwardly so as to form, in the assembled state, a collection container 3 having a bulged, convex structure, which may have a rotationally symmetric geometry.

Specifically, as can be seen from FIG. 3, the straps 13 may in embodiments have a form, in which they extend, starting from the axial hub segments 12, first essentially parallel to the axial direction and then bulge outwardly according to a predefined curvature thus defining the final shape and geometry of the outer shell of the collection container 3 in circumferential direction.

As can be seen from the embodiment shown in FIG. 3 and FIG. 4, in which FIG. 4 shows a half shell segment assembled from two quarter shell segments according to FIG. 3, the axial hub segment 12.1 located at the right-hand side in FIG. 3 and FIG. 4 comprises an axial circular wall segment 15, in particular in the form of disc-like segment, defining in the assembled state a section of a closed axial wall of the outer shell of the collection container 3.

The axial hub segment 12.1 may further comprise an axial flange section 16 extending, with respect to the assembled state, axially inwardly, and defining a circumferential base from which the straps 4 extend in axial direction.

As shown in the figures, the axial wall segment 15 may comprise at an outer axial side an axial protrusion 17 defining a segment of the stub axle section 8.1 (see FIG. 2) established on the right-hand axial hub section 6. The axial stub axle 8.1 is designed to cooperate, in the assembled state of the collection container, with the bearing shell 7.1 located on the right-hand side of the retaining bracket 2 as shown in FIG. 1 and FIG. 2.

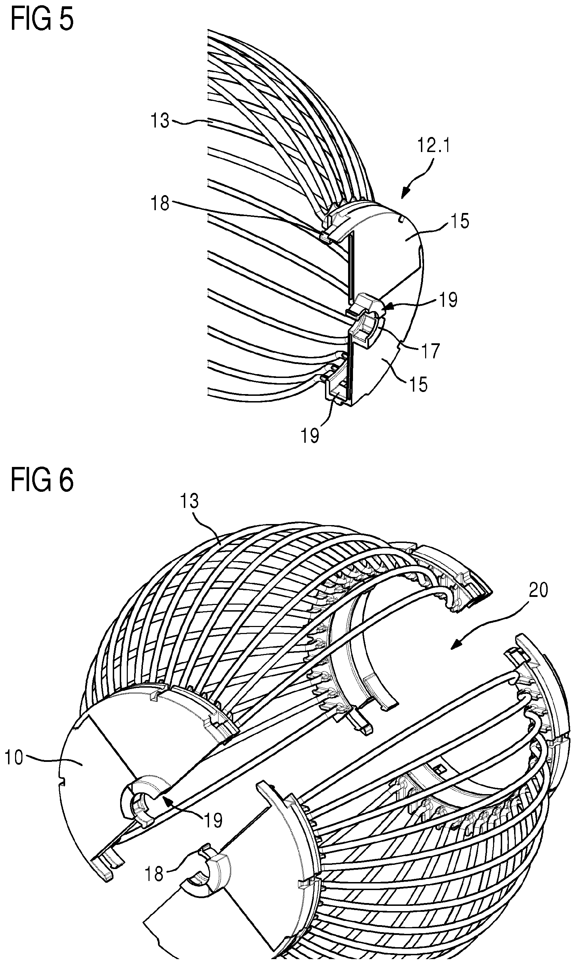

As exemplarily shown in the embodiments of FIG. 2 to FIG. 4 and in particular FIG. 5 showing a detail of FIG. 4, the axial protrusion 17 as well as the axial flange section 16 of the axial circular wall segment may, as shown for example in FIG. 2, comprise connector elements or a connector structure, for example in the form of latching tongues 18 projecting therefrom in circumferential direction. Further, the axial protrusion 17 as well as the axial flange section 16 may comprise at sides averted from the latching tongues 18 counterpart connector elements, for example in the form of counterpart latching recesses 19.

The connector elements and counterpart connector elements may be designed such that they define connector interfaces, and may be implemented for mutual engagement.

As can be seen from the embodiment in the figures, the latching tongues 18 and latching recesses 19 may be designed such that the latching tongues 18 of an adjoining, preceding shell segment 10 can latch into the latching recesses 19, and such that the latching tongues 18 can latch into the latching recesses of a subsequent shell segment 10, thereby holding together the shell segments 10 in the assembled state. Cohesion of the shell segments 10 in the assembled state in particular may be supported in that the stub axle section(s) 8 is/are enclosed by the bearing shells of the retaining bracket 2 pivotably supporting the collecting basket 3.

It shall be noted, that the stub axle section 8.2 located on the left-hand side in FIG. 2 may, but must not, comprise similar connector interfaces such that a latching engagement can be obtained at the left-hand axial hub 6 of the collection container 3.

As can be seen from the exemplary embodiment shown in FIG. 3 and FIG. 4, the left-hand axial hub segment 12.2 may be implemented as as a ring segment 12.2 forming part of an axial hub in the assembled state of the collection container, which is adapted to be pivotably coupled with the left-hand bearing shell (cf. FIG. 2) of the retaining bracket 2.

As can be seen from the embodiments shown in particular in FIG. 2, FIG. 4, and FIG. 6 showing two half shell segments according to FIG. 4 shortly before assembly, an inner radius of the ring segment 12.2 may be implemented such that in the assembled configuration of the collection container 3 an axial discharge opening 20 for discharging objects collected in the collection container 3 is established. Such a discharge opening 20 may be of advantage for a quickly and easily discharge of collected objects from the collection container 3. Regarding the modular design of the collection container 3 assembled from several shell segments 10, it provides for a comparatively easy implementation of such discharge openings while at the same time still securing easy and uncomplicated assembly and manufacture.

Below, an exemplary way of assembling the collection container 3 from four quarter shells is explained on the basis of FIG. 1 to FIG. 7, wherein FIG. 7 shows a detail of FIG. 6. This general assembly principle also applies for collection containers having a higher or lower number of shell segments 10.

In an initial step, a predefined number of shell segments 10 (cf. FIG. 3) may be provided, for example by manufacture.

In a subsequent step, the single shell segments 10 may be combined and set together, wherein the latching tongues 18 and latching recesses 19 of adjoining shell segments 10 may be latched with each other.

For example, two of the quarter shell segments 10 may be combined to a first half shell as shown in FIG. 4 and FIG. 5 wherein corresponding latching elements mutually engage. Then, a second half shell may be assembled from two further quarter shell segments 10, and the two half shell segments finally may be combined to form the outer shell of the collection container 3, which is exemplarily indicated in FIG. 6. and FIG. 7.

As can be inferred from FIG. 6 and FIG. 7, upon setting the two half shell segments together, the latching tongues 18 projecting from the half shell segments enter and latch with corresponding latching recesses 19 to thereby hold together the four shell segments 10 to form the collection container 3, at least, however, the outer shell thereof.

In a further (optional) mounting step, the assembled collection container 3 may be coupled to the retaining bracket 2 by engaging the stub axle sections 8 with their corresponding bearing shells 7 in order to pivotably couple the collection container 3 to the retaining bracket 2.

By mounting the collection container 4 to the retaining bracket 3, which may be obtained by compressing the collection container in axial direction and fitting it to the retaining bracket 3, the sliding surfaces 18, 19 mutually engage so that the collection container 4 is pivotably supported on the retaining bracket 3.

In view of the above, it can be inferred, that the collection container 3 and collection assembly as proposed herein enable comparatively easy and straight forward assembly, mounting and manufacture, and at the same time enable structural flexibility, which shall mean, that form, shape and structure of the collection container, such as for example the discharge opening, can be adapted within a comparatively broad range without impairing easy and uncomplicated assembly. Therefore, the underlying object of the invention can be considered to be achieved by the embodiments according to the invention as described herein.

Below, an exemplary mode of operation for the collection assembly and collection container is described in connection with FIG. 8 and FIG. 9, in which FIG. 8 and FIG. 9 respectively show a side view and perspective view related to ordinary operational modes of the collection assembly.

The collection container 3 pivotably held or attached to the retaining bracket 2 is designed such that it can be rolled in a pivoting movement on the ground, which is indicated as a forward movement in FIG. 8 by an arrow pointing to the right hand side. For manually operating the collection assembly, the bracket 2 may be coupled via the adapter section 9 with a counterpart adapter section 21 implemented at a handle 22 configured to be held by the operator in order to roll the collection container 3 over the ground.

In case that the collection container 3 while rolling on the ground reaches an object 23 of sufficient rigidity, such as for example an apple, and the collection container 3 is rolled over the object 23, the object 23 may pass the envelope defined by the circumferential straps 13 of the collection container 3 and enter the collection container 3.

For entering the collection container 3, the object 23, upon rolling the collection container 3 over the object 23, will cause a group of neighbouring straps 13 of the envelope to elastically bend and spread apart such that, by the elastic deformation, a gap is generated in the envelope through which the object 23 can pass and penetrate the envelope. Upon entering the collection container 3, the gap will be closed or removed again by the elastic resilient forces of the straps 13.

Thus, by rolling the collection container 3 over the object 23, the object 23 is collected into the collection container 3 through the envelope by elastic deformation thereof.

As can be seen from FIG. 8 and FIG. 9, the retaining bracket 2, for example at a respective bearing shell, may comprise on an outer side thereof a spout 24. The spout 24 may be in integral design in a one-piece configuration with the retaining bracket 2 in form of a bent pipe end section.

As can for example be seen from FIG. 1 and FIG. 2, the spout 24 may have an inner opening communicating and being aligned with the axial discharge opening 20 of the collection container 3.

By utilizing the spout 24, it is possible to empty the collection container 3 and discharge the objects 23 collected therein through the spout 24. The collection container 3 may be emptied by twisting (see curved arrow in FIG. 9) the collection assembly such that the spout 24 faces downwards so that objects 23 contained in the collection container 3 may exit via the spout 24 by the action of gravity.

Thus, it is not required to discharge collected objects 23 through strap structure of the envelope of the collection container 3, and therefore, discharging objects 23 collected in the collection container 3 can be greatly simplified.

### List of reference numerals

- 1: collection assembly;
- 2: retaining bracket;
- 3: collection container;
- 4: base section;
- 5: retaining arm;
- 6: axial hub section;
- 7: bearing shell;
- 8: stub axle section;
- 9: adapter section;
- 10: shell segment;
- 11: axial end;
- 12: axial hub segment;
- 13: strap;
- 14: gap;
- 15: axial circular wall segment;
- 16: axial flange section;
- 17: axial protrusion;
- 18: latching tongue;
- 19: counterpart latching recess;
- 20: axial discharge opening;
- 21: counterpart adapter section
- 22: handle
- 23: object
- 24: axial spout

- P: pivot axis;
- α: dihedral angle (alpha)

## Claims

1. Collection container shell segment (10) designed and arranged for being assembled with at least one structurally identical further shell segment (10) to constitute in the assembled state an outer shell of a collection container (3) that is configured to be pivotable around a pivot axis (P) and operable to pick up objects (23), such as fruits, by rolling it over the objects (23) in a pivoting movement of the collection container (3) to thereby pass the objects (23) through the outer shell into the collection container (3), the collection container shell segment (10) defining, in circumferential direction relative to the pivot axis (P), a predefined angular sector (alpha) of the outer shell of the collection container (3), having, with respect to the pivot axis (P), a predefined dihedral angle (alpha).

2. Collection container shell segment (10) according to claim 1, wherein the dihedral angle (alpha) spanned by the predefined angular sector (10) lies in at least one of the ranges 30 - 180 °, 45° - 135°, and 60° to 90°.

3. Collection container shell segment (10) according to claim 2, implemented such that the predefined angular sector defines one of a half-shell or quarter-shell (10) of the outer shell.

4. Collection container shell segment (10) according to at least one of claims 1 to 3, wherein the shell segment is implemented as an integral one-piece part, made from one of plastic and metal.

5. Collection container shell segment (10) according to at least one of claims 1 to 4, comprising at each axial end (10) an axial hub segment (12), the hub segments (12) being interconnected in axial direction by a plurality of threads (13), the threads (13) being mutually spaced, and elastically deformable in circumferential direction such that an object (23) can be passed through a gap between a group of threads (13) elastically pushed apart in circumferential direction.

6. Collection container shell segment (10) according to at least one of claims 1 to 4, comprising at least one axial hub segment (12), in particular according to claim 5, wherein the axial hub segment (12) is implemented as a ring segment (12.2) forming a part of an axial hub (6) which, in the assembled state of the collection container (2), is adapted to be pivotably coupled with a counterpart hub (7.2) of a retaining bracket (2) for the collection container (3).

7. Collection container shell segment (10) according to claim 6, an inner radius of the ring segment (12.2) is such that in the assembled configuration of the collection container (3) an axial discharge opening (20) for discharging objects (23) collected in the collection container (3) is established.

8. Collection container shell segment (10) according to at least one of claims 1 to 4, comprising at least one axial hub segment (12.1), in particular according to claim 5, wherein at least one of the hub segments (12.1) is implemented as an axial circular wall segment.

9. Collection container shell segment (10) according to claim 8, the axial wall segment (12.1) comprising at an outer axial side an axial protrusion (17) defining a segment of an axial stub axle (8.1) intended to cooperate, in the assembled state, with a counterpart bearing shell (7.1).

10. Collection container shell segment (10) according to at least one of claims 1 to 9, at least one of the hub segments (12) comprises at least one connector interface, comprising at least one connector structure (18) designed for engagement, in the assembled state, with a counterpart connector structure (19) of a counterpart connector interface of an adjoining shell segment (10).

11. Collection container shell segment (10) according to claim 10, wherein the connector interface comprises at least one of at least one latching extension (18) and at least one latching recess (19), the latching extension (18) preferably being configured and adapted to engage, in the assembled state, a corresponding latching recess (19) of a connector interface of an adjoining collection container shell segment, and the latching recess (19) preferably being configured and adapted to engage, in the assembled state, a latching extension (18) of a connector interface of the or a further an adjoining shell segment.

12. Collection container shell segment (10) according to at least one of claims 10 and 11, wherein the connector interface at least in part is formed on at least one axial flange (12, 16) of the collection container shell segment (10).

13. Collection container (3) configured to be pivotable around a pivot axis (P) and operable to pick up objects (23), such as fruits, by rolling it over the objects (23) in a pivoting movement to thereby pass the objects (23) through the outer shell into the collection container (3), the collection container (3) comprising an outer shell that is assembled from a predefined number of, at least two, structurally identical collection container shell segments (10) each designed according to at least one of claims 1 to 12, each shell segment (10) defining, in circumferential direction relative to the pivot axis (P), a predefined angular sector (alpha) of the outer shell of the collection container (3), having, with respect to the pivot axis (P), a predefined dihedral angle (alpha), wherein the sum of the dihedral angles (alpha) of the predefined number of shell segments (10) advantageously equals 360°.

14. Collection assembly (2,3,23) comprising at least one collection container (3) according to claim 13, and a retaining bracket for pivotably retaining the collection container (3), and further optionally comprising a handle (22) for manually operating the collection container (3) and adapted to be coupled to the retaining bracket (2).

15. Method of manufacturing a collection container (3) according to claim 13, the method comprising the steps of:
a. manufacturing a predefined number of structurally identical collection container shell segments (10) according to at least one of claims 1 to 12, each shell segment (10) defining, in circumferential direction relative to the pivot axis (P), a predefined angular sector (alpha) of the outer shell of the collection container (3), having, with respect to the pivot axis (P), a predefined dihedral angle (alpha), wherein the sum of the dihedral angles of the predefined number of shell segments advantageously equals 360°,
b. assembling and putting together the structurally identical shell segments (10) by interconnecting corresponding connector interfaces (18, 19) of adjoining shell segments (10) to obtain, with respect to the pivot axis (P), a circumferential full shell defining the outer shell of the collection container (3).

## Patentansprüche

1. Sammelbehälter-Schalensegment (10), das so ausgebildet und angeordnet ist, dass es mit mindestens einem strukturell identischen weiteren Schalensegment (10) zusammengesetzt werden kann, um im zusammengesetzten Zustand eine Außenhülle eines Sammelbehälters (3) zu bilden, der so ausgebildet ist, dass er um eine Drehachse (P) schwenkbar ist und Objekte (23), wie beispielsweise Früchte, aufnehmen kann, indem er mit einer Schwenkbewegung des Sammelbehälters über die Objekte (23) rollt, um dadurch die Objekte (23) durch die Außenhülle in den Sammelbehälter (3) zu leiten, wobei das Sammelbehälter-Schalensegment (10) in Umfangsrichtung relativ zur Drehachse (P) einen vordefinierten Winkelsektor (alpha) der Außenhülle des Sammelbehälters (3) definiert, der in Bezug auf die Drehachse (P) einen vordefinierten Flächenwinkel (alpha) aufweist.

2. Sammelbehälter-Schalensegment (10) nach Anspruch 1, wobei der Flächenwinkel (alpha), der durch den vordefinierten Winkelsektor (10) gespannt ist, in mindestens einem der Bereiche 30 - 180°, 45° - 135° und 60° bis 90° liegt.

3. Sammelbehälter-Schalensegment (10) nach Anspruch 2, das so ausgebildet ist, dass der vordefinierte Winkelsektor aus einer halben Schale oder einem Viertel der Schale (10) der Außenhülle gebildet ist.

4. Sammelbehälter-Schalensegment (10) nach zumindest einem der Ansprüche 1 bis 3, wobei das Schalensegment als integrales einteiliges Teil aus Kunststoff und Metall ausgebildet ist.

5. Sammelbehälter-Schalensegment (10) nach zumindest einem der Ansprüche 1 bis 4, umfassend an jedem axialen Ende (10) ein axiales Nabensegment (12), wobei die Nabensegmente (12) in axialer Richtung durch eine Vielzahl von Gewinden (13) miteinander verbunden sind, wobei die Gewinde (13) gegenseitig beabstandet und in Umfangsrichtung elastisch verformbar sind, so dass ein Objekt (23) durch einen Spalt zwischen einer Gruppe von Gewinden (13) hindurchgeführt werden kann, die elastisch in Umfangsrichtung auseinandergedrückt sind.

6. Sammelbehälter-Schalensegment (10) nach zumindest einem der Ansprüche 1 bis 4, umfassend mindestens ein axiales Nabensegment (12), insbesondere nach Anspruch 5, wobei das axiale Nabensegment (12) als Ringsegment (12.2) ausgeführt ist, das Teil einer axialen Nabe (6) ist, die im zusammengesetzten Zustand des Sammelbehälters (2) schwenkbar mit einer Gegenstücknabe (7.2) einer Befestigungshalterung (2) für den Sammelbehälter (3) koppelbar ist.

7. Sammelbehälter-Schalensegment (10) nach Anspruch 6, wobei ein Innenradius des Ringsegments (12.2) derart ist, dass in der zusammengesetzten Konfiguration des Sammelbehälters (3) eine axiale Ausbringöffnung (20) zum Ausbringen von im Sammelbehälter (3) gesammelten Objekten (23) ausgebildet ist.

8. Sammelbehälter-Schalensegment (10) nach zumindest einem der Ansprüche 1 bis 4, umfassend mindestens ein axiales Nabensegment (12.1), insbesondere nach Anspruch 5, wobei mindestens eines der Nabensegmente (12.1) als axiales Ringwandsegment ausgebildet ist.

9. Sammelbehälter-Schalensegment (10) nach Anspruch 8, wobei das axiale Wandsegment (12.1) an einer axialen Außenseite einen axialen Vorsprung (17) umfasst, der ein Segment einer axialen Nabenachse (8.1) definiert, die dazu bestimmt ist, im zusammengesetzten Zustand mit einer Gegenlagerhülse (7.1) zusammenzuwirken.

10. Sammelbehälter-Schalensegment (10) nach zumindest einem der Ansprüche 1 bis 9, wobei mindestens eines der Nabensegmente (12) mindestens eine Steckverbinder-Schnittstelle umfasst, die mindestens eine Steckverbinder-Struktur (18) umfasst, die für den Eingriff im zusammengesetzten Zustand mit einer Gegenstück-Steckverbinder-Struktur (19) einer Gegenstück-Steckverbinder-Schnittstelle eines angrenzenden Schalensegments (10) vorgesehen ist.

11. Sammelbehälter-Schalensegment (10) nach Anspruch 10, wobei die Steckverbinder-Schnittstelle mindestens eine von mindestens einer Einrastverlängerung (18) und mindestens einer Einrastvertiefung (19) umfasst, wobei die Einrastverlängerung (18) vorzugsweise ausgebildet und angepasst ist, um im zusammengesetzten Zustand in eine entsprechende Einrastvertiefung (19) einer Steckverbinder-Schnittstelle eines angrenzenden Sammelbehälter-Schalensegments einzugreifen, und die Einrastvertiefung (19) vorzugsweise ausgebildet und angepasst ist, um im zusammengesetzten Zustand in eine Einrastverlängerung (18) einer Steckverbinder-Schnittstelle des oder eines weiteren angrenzenden Schalensegments einzugreifen.

12. Sammelbehälter-Schalensegment (10) nach zumindest einem der Ansprüche 10 und 11, wobei die Verbindungsschnittstelle zumindest teilweise an mindestens einem axialen Flansch (12, 16) des Sammelbehälter-Schalensegments (10) ausgebildet ist.

13. Sammelbehälter (3), der so ausgebildet ist, dass er um eine Drehachse (P) schwenkbar ist und Objekte (23), wie beispielsweise Früchte, aufnehmen kann, indem er mit einer Schwenkbewegung über die Objekte (23) rollt, um dadurch die Objekte (23) durch die Außenhülle in den Sammelbehälter (3) zu leiten, wobei der Sammelbehälter (3) eine Außenhülle umfasst, die aus einer vorbestimmten Anzahl von mindestens zwei strukturell identischen Sammelbehälter-Schalensegmenten (10) zusammengesetzt ist, die jeweils nach zumindest einem der Ansprüche 1 bis 12 ausgebildet sind, wobei jedes Schalensegment (10) in Umfangsrichtung relativ zur Drehachse (P) einen vorgegebenen Winkelabschnitt (alpha) der Außenhülle des Sammelbehälters (3) definiert, der in Bezug auf die Drehachse (P) einen vorgegebenen Flächenwinkel (alpha) aufweist, wobei die Summe der Flächenwinkel (alpha) der vorgegebenen Anzahl von Schalensegmenten (10) vorzugsweise 360° beträgt.

14. Sammelanordnung (2, 3, 23), umfassend mindestens einem Sammelbehälter (3) nach Anspruch 13 und eine Befestigungshalterung zum schwenkbaren Halten des Sammelbehälters (3) und ferner optional einen Griff (22) zum manuellen Betätigen des Sammelbehälters (3), der mit der Befestigungshalterung (2) koppelbar ist.

15. Verfahren zur Herstellung eines Sammelbehälters (3) nach Anspruch 13, wobei das Verfahren die folgenden Schritte umfasst:
a. Herstellen einer vordefinierten Anzahl von strukturell identischen Sammelbehälter-Schalensegmenten (10) nach zumindest einem der Ansprüche 1 bis 12, wobei jedes Schalensegment (10) in Umfangsrichtung relativ zur Drehachse (P) einen vordefinierten Winkelsektor (alpha) der Außenhülle des Sammelbehälters (3) definiert, der in Bezug auf die Drehachse (P) einen vordefinierten Flächenwinkel (alpha) aufweist, wobei die Summe der Flächenwinkel der vordefinierten Anzahl von Schalensegmenten vorzugsweise 360° beträgt,
b. Zusammenbau und Zusammenfügen der strukturell identischen Schalensegmente (10) durch Verbinden entsprechender Verbindungsschnittstellen (18, 19) angrenzender Schalensegmente (10), um in Bezug auf die Drehachse (P) eine umlaufende Vollschale zu erhalten, die die Außenschale des Sammelbehälters (3) definiert.

## Revendications

1. Segment de coque de récipient collecteur (10) conçu et agencé pour être assemblé avec au moins un autre segment de coque (10) structurellement identique pour constituer à l'état assemblé une coque extérieure d'un récipient collecteur (3) qui est configuré pour pouvoir pivoter autour d'un axe de pivotement (P) et pour être actionné pour saisir des objets (23), comme des fruits, en le faisant rouler sur les objets (23) dans un mouvement de pivotement du récipient collecteur (3) pour faire ainsi passer les objets (23) à travers la coque extérieure dans le récipient collecteur (3), le segment de coque de récipient collecteur (10) définissant, dans la direction circonférentielle par rapport à l'axe de pivotement (P), un secteur angulaire prédéterminé (alpha) de la coque extérieure du récipient collecteur (3), ayant, par rapport à l'axe de pivotement (P), un angle dièdre prédéterminé (alpha).

2. Segment de coque de récipient collecteur (10) selon la revendication 1, dans lequel l'angle dièdre (alpha) couvert par le secteur angulaire prédéterminé (10) se situe dans au moins l'une des plages 30 - 180 °, 45° - 135°, et 60° à 90°.

3. Segment de coque de récipient collecteur (10) selon la revendication 2, mis en oeuvre de telle sorte que le secteur angulaire prédéfini définit une des demi-coque ou quarts de coque (10) de la coque extérieure.

4. Segment de coque de récipient collecteur (10) selon au moins l'une des revendications 1 à 3, dans lequel le segment de coque est réalisé sous la forme d'une partie intégrale d'une seule pièce, en matière plastique et en métal.

5. Segment de coque de récipient collecteur (10) selon au moins l'une des revendications 1 à 4, comprenant à chaque extrémité axiale (10) un segment de moyeu axial (12), les segments de moyeu (12) étant interconnectés dans la direction axiale par une pluralité de filets (13), les filets (13) étant mutuellement espacés, et déformables élastiquement dans la direction circonférentielle de sorte qu'un objet (23) puisse passer par un espace entre un groupe de filets (13) poussés élastiquement à distance en direction circonférentielle.

6. Segment de coque de récipient collecteur (10) selon au moins l'une des revendications 1 à 4, comprenant au moins un segment de moyeu axial (12), en particulier selon la revendication 5, dans lequel le segment de moyeu axial (12) est réalisé comme un segment annulaire (12.2) faisant partie d'un moyeu axial (6) qui, à l'état monté du récipient collecteur (2), peut être couplé de manière pivotante à un moyeu homologue (7.2) d'un support de retenue (2) pour le récipient collecteur (3).

7. Segment de coque de récipient collecteur (10) selon la revendication 6, un rayon intérieur du segment annulaire (12.2) est tel que, dans la configuration assemblée du récipient collecteur (3), une ouverture d'évacuation axiale (20) pour décharger les objets (23) recueillis dans le récipient collecteur (3) est établie.

8. Segment de coque de récipient collecteur (10) selon au moins l'une des revendications 1 à 4, comprenant au moins un segment de moyeu axial (12.1), en particulier selon la revendication 5, dans lequel au moins l'un des segments de moyeu (12.1) est réalisé sous forme de segment de paroi circulaire axiale.

9. Segment de coque de récipient collecteur (10) selon la revendication 8, le segment de paroi axiale (12.1) comprenant sur un côté axial extérieur une saillie axiale (17) définissant un segment d'un axe axial (8.1) destiné à coopérer, à l'état monté, avec une coque de palier (7.1) de contrepartie.

10. Segment de coque de récipient collecteur (10) selon au moins l'une des revendications 1 à 9, au moins l'un des segments de moyeu (12) comprend au moins une interface de connecteur, comprenant au moins une structure de connecteur (18) conçue pour coopérer, à l'état monté, avec une structure de connecteur homologue (19) d'une interface de connecteur homologue d'un segment de coque (10) adjacent.

11. Segment de coque de récipient collecteur (10) selon la revendication 10, dans lequel l'interface de connecteur comprend au moins l'une d'au moins une extension de verrouillage (18) et au moins un évidement de verrouillage (19), l'extension de verrouillage (18) étant de préférence configurée et adaptée pour engager, à l'état monté, un évidement de verrouillage correspondant (19) d'une interface de connecteur d'un segment de coque de récipient collecteur adjacent et l'évidement de verrouillage (19) étant configuré et adapté pour engager, dans l'état monté, un prolongement de verrouillage (18) d'une interface de connecteur de l'un ou plusieurs autres segments de coque adjacent.

12. Segment de coque de récipient collecteur (10) selon au moins l'une des revendications 10 et 11, dans lequel l'interface de connecteur est formée au moins en partie sur au moins une bride axiale (12, 16) du segment de coque de récipient collecteur (10).

13. Récipient collecteur (3) configuré pour pouvoir pivoter autour d'un axe de pivotement (P) et pouvant être actionné pour ramasser des objets (23), tels que des fruits, en le faisant rouler sur les objets (23) dans un mouvement pivotant pour faire ainsi passer les objets (23) à travers la coque extérieure dans le récipient collecteur (3), le récipient collecteur (3) comprenant une coque extérieure qui est assemblée d'un nombre prédéterminé d'au moins deux, des segments de coque (10) de récipient collecteur (10) structurellement identiques, chacun conçu selon au moins l'une des revendications 1 à 12, chaque segment de coque (10) définissant, dans la direction circonférentielle par rapport à l'axe de pivotement (P), un secteur angulaire prédéfini (alpha) de la coque extérieure du récipient collecteur (3), ayant, par rapport à l'axe de pivotement (P), un angle dièdre prédéterminé (alpha), où la somme des angles dièdres (alpha) du nombre prédéfini des segments de coque (10) vaut avantageusement 360°.

14. Ensemble collecteur (2, 3, 23) comprenant au moins un récipient collecteur (3) selon la revendication 13, et un support de retenue pour retenir de manière pivotante le récipient collecteur (3), et comprenant en outre éventuellement une poignée (22) pour actionner manuellement le récipient collecteur (3) et adapté pour être couplé au support de retenue (2).

15. Procédé de fabrication d'un récipient collecteur (3) selon la revendication 13, le procédé comprenant les étapes consistant à :
a. fabrication d'un nombre prédéfini de segments (10) de coque de récipient collecteur (10) structurellement identiques selon au moins l'une des revendications 1 à 12, chaque segment (10) de coque définissant, en direction circonférentielle par rapport à l'axe de pivotement (P), un secteur angulaire prédéfini (alpha) de la coque extérieure du récipient de collecte (3) ayant, par rapport à l'axe de pivotement (P), un angle dièdre prédéterminé (alpha), dans lequel la somme des angles dièdres des segments de coque prédéfinis correspond avantageusement à 360°,
b. assembler et mettre ensemble les segments de coque structurellement identiques (10) en interconnectant les interfaces de connexion correspondantes (18, 19) des segments de coque adjacents (10) pour obtenir, par rapport à l'axe de pivotement (P), une coque circonférentielle complète définissant la coque extérieure du récipient collecteur (3).
